# FASCICULE DE BREVET EUROPEEN

(11) **EP 2 931 537 B1**
(45) Date de publication et mention de la délivrance du brevet: **15.03.2017**
(21) Numéro de dépôt: 13802976.4
(22) Date de dépôt: 11.12.2013
(51) Int. Cl.: B60C 15/00, B60C 15/06, B60C 9/02

(54) **BOURRELET DE PNEUMATIQUE POUR VEHICULE LOURD DE TYPE GENIE CIVIL**
WULST EINES REIFENS FÜR BAUMASCHINEN-SCHWERLASTFAHRZEUGE
BEAD OF A TYRE FOR A HEAVY VEHICLE OF THE CONSTRUCTION PLANT TYPE

(30) Priorité: 13.12.2012 FR 1261999
(43) Date de publication de la demande: 21.10.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: KOLLIAS, Athanase, F-63040 Clermont-Ferrand Cedex 9 (FR)
(74) Mandataire: Millanvois, Patrick Jacques Jean
(86) Numéro de dépôt international: PCT/EP2013/076194
(87) Numéro de publication internationale: WO 2014/090862

(56) Documents cités:
- EP-A1- 2 216 189
- WO-A1-2012/017673
- US-A- 5 236 031

## Description

La présente invention concerne un pneumatique radial destiné à équiper un véhicule lourd de type génie civil.

Bien que non limitée à ce type d'application, l'invention sera plus particulièrement décrite en référence à un pneumatique radial de grande dimension, destiné, par exemple, à être monté sur un dumper, véhicule de transport de matériaux extraits de carrières ou de mines de surface. Le diamètre nominal de la jante d'un tel pneumatique, au sens de la norme European Tyre and Rim Technical Organisation ou ETRTO, est au moins égal à 25 pouces.

Un pneumatique comprend deux bourrelets, assurant la liaison mécanique entre le pneumatique et la jante sur laquelle il est monté, les bourrelets étant réunis respectivement par l'intermédiaire de deux flancs à une bande de roulement, destinée à venir en contact avec le sol par l'intermédiaire d'une surface de roulement.

Dans ce qui suit, les directions circonférentielle, axiale et radiale désignent respectivement une direction tangente à la surface de roulement selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

Un pneumatique radial comprend plus particulièrement une armature de renforcement, comprenant une armature de sommet, radialement intérieure à la bande de roulement, et une armature de carcasse, radialement intérieure à l'armature de sommet.

L'armature de carcasse d'un pneumatique radial pour véhicule lourd de type génie civil comprend habituellement au moins une couche de carcasse constituée de renforts généralement métalliques enrobés d'un matériau élastomérique d'enrobage ou mélange d'enrobage. Dans le domaine du pneumatique, on appelle usuellement mélange un matériau élastomérique usuellement obtenu par mélangeage des composants du matériau. La couche de carcasse comprend une partie principale, reliant les deux bourrelets entre eux et s'enroulant, dans chaque bourrelet, de l'intérieur vers l'extérieur du pneumatique autour d'une tringle pour former un retournement. Les renforts métalliques sont sensiblement parallèles entre eux et font, avec la direction circonférentielle, un angle compris entre 85° et 95°, pour la partie principale, et un angle compris entre 75° et 105°, pour le retournement.

La tringle est constituée d'un élément de renforcement circonférentiel, généralement métallique entouré d'au moins un matériau d'enrobage, de manière non exhaustive, élastomérique ou textile. Dans ce qui suit, on appelle diamètre de la tringle le diamètre de la section méridienne sensiblement circulaire de la tringle qui est le diamètre du cercle circonscrit à la section méridienne de la tringle, constituée de l'élément de renforcement circonférentiel métallique entouré de son élément d'enrobage. La portion de tringle en contact avec l'armature de carcasse contribue à la reprise des efforts de tension dans l'armature de carcasse au gonflage, par couplage avec l'armature de carcasse. Cette contribution à la reprise d'efforts de tension dépend de la rigidité de torsion de la tringle et de la longueur du retournement. Dans le cas usuel d'une forte rigidité de torsion de la tringle, les efforts de tension au gonflage sont essentiellement repris par la tringle, avec une contribution secondaire du retournement.

Le retournement, dans chaque bourrelet, permet l'ancrage de la couche de carcasse à la tringle du bourrelet. Dans le cas d'un pneumatique pour véhicule lourd de type génie civil, le retournement est généralement long, c'est-à-dire que son extrémité libre est radialement plus proche du point le plus axialement extérieur de l'armature de carcasse, au niveau du flanc du pneumatique, que du point le plus axialement extérieur de la tringle.

Chaque bourrelet comprend également un élément de remplissage prolongeant radialement vers l'extérieur la tringle et de forme sensiblement triangulaire. L'élément de remplissage est constitué d'au moins un matériau élastomérique de remplissage ou mélange de remplissage, et souvent constitué d'un empilage, selon la direction radiale, d'au moins deux mélanges de remplissage de compositions chimiques différentes. En outre, l'élément de remplissage sépare axialement la partie principale et le retournement.

Un mélange, après cuisson, est caractérisé mécaniquement par des caractéristiques de contrainte-déformation en traction, déterminées par des essais de traction. Ces essais de traction sont effectués par l'homme du métier, sur une éprouvette, selon une méthode connue, par exemple conformément à la norme internationale ISO 37, et dans les conditions normales de température (23 + ou - 2°C) et d'hygrométrie (50 + ou -5% d'humidité relative), définies par la norme internationale ISO 471. On appelle module d'élasticité à 10% d'allongement d'un mélange, exprimé en méga pascals (MPa), la contrainte de traction mesurée pour un allongement de 10% de l'éprouvette.

Un mélange, après cuisson, est également caractérisé mécaniquement par sa dureté. La dureté est notamment définie par la dureté Shore A déterminée conformément à la norme ASTM D 2240-86.

Au cours du roulage du véhicule, le pneumatique, monté sur sa jante, gonflé et écrasé sous la charge du véhicule, est soumis à des cycles de flexion, en particulier au niveau de ses bourrelets et de ses flancs.

Les cycles de flexion entraînent en particulier des contraintes et des déformations principalement de cisaillement et de compression, dans les mélanges de remplissage, en raison de la flexion du bourrelet sur le rebord de jante.

Le document EP 2216189 décrit un bourrelet de pneumatique dont l'endurance est améliorée par une réduction des déformations de compression dans le retournement, lors de la flexion du bourrelet sur la jante, en utilisation. Cet objectif est atteint grâce à un retournement tel que la distance entre le retournement et la partie principale décroît continûment, radialement vers l'extérieur, à partir de la tringle, jusqu'à une distance minimale, puis augmente continûment jusqu'à une distance maximale. Le retournement s'étend radialement à l'extérieur du point du retournement correspondant à la distance maximale entre le retournement et la partie principale.

Le document JP 2010274862 décrit également un bourrelet de pneumatique dont l'endurance est améliorée, lors de la flexion du bourrelet sur la jante en utilisation, dans le cas d'un bourrelet, tel que décrit par le document EP 2216189, avec un retournement tel que la distance entre le retournement et la partie principale décroît continûment, radialement vers l'extérieur, à partir de la tringle, jusqu'à une distance minimale, puis augmente continûment jusqu'à une distance maximale. Cet objectif est atteint grâce à la présence d'un élément de remplissage entre la partie principale et le retournement, comprenant un premier mélange dur, s'étendant radialement vers l'extérieur depuis la tringle, et un deuxième mélange de remplissage, s'étendant radialement vers l'extérieur depuis le premier mélange dur. Le deuxième mélange de remplissage est présent au moins en partie dans la zone où la distance entre la partie principale et le retournement est minimale. Cette conception permet de diminuer les efforts de cisaillement dans cette zone et donc d'améliorer encore l'endurance du bourrelet.

Dans les solutions techniques décrites respectivement par les documents précités EP 2216189 et JP 2010274862, un retournement tel que la distance entre le retournement et la partie principale décroît continûment, radialement vers l'extérieur, à partir de la tringle, jusqu'à une distance minimale, entraîne un rapprochement significatif du retournement de la partie principale de couche de carcasse.

Ce profil méridien de retournement permet de diminuer la compression dans le retournement, voire de le mettre en tension, car l'ensemble constitué par le retournement, l'élément de remplissage et la partie principale de couche de carcasse se comporte mécaniquement comme une poutre dont la section décroît radialement vers l'extérieur.

Par ailleurs, le rapprochement du retournement de la partie principale entraîne corrélativement un épaississement de la portion de bourrelet axialement extérieur au retournement et constituée d'au moins un mélange. Cet épaississement entraîne une diminution des sollicitations de cisaillement à l'interface entre le mélange axialement extérieur et adjacent au retournement et le retournement, donc une meilleure tenue en fatigue de cette interface, ce qui contribue à l'amélioration de l'endurance du pneumatique.

A contrario, le rapprochement du retournement de la partie principale entraîne une réduction d'épaisseur de l'élément de remplissage, axialement intercalé entre le retournement et la partie principale de couche de carcasse. Cette réduction d'épaisseur entraîne une augmentation des sollicitations de cisaillement à l'interface entre l'élément de remplissage et la partie principale de couche de carcasse, donc une moindre tenue en fatigue de cette interface, ce qui contribue à une dégradation de l'endurance du pneumatique.

Le brevet EP 2 216 189 divulgue un pneumatique comprenant toutes les caractéristiques du préambule de la revendicaion 1.

Les inventeurs se sont donnés ainsi pour objectif d'améliorer encore l'endurance des bourrelets d'un pneumatique radial pour véhicule lourd de type génie civil, pour remédier à l'inconvénient précédemment décrit tout en conservant les avantages techniques constatés.

Cet objectif a été atteint, selon l'invention, par un pneumatique pour véhicule lourd de type génie civil comprenant :
- deux bourrelets destinés à entrer en contact avec une jante et reliés entre eux par une armature de carcasse comprenant au moins une couche de carcasse,
- la ou chaque couche de carcasse comprenant une partie principale s'enroulant dans chaque bourrelet, axialement de l'intérieur vers l'extérieur du pneumatique, autour d'une tringle ayant un diamètre, pour former un retournement ayant une extrémité libre,
- chaque bourrelet comprenant un élément de remplissage comprenant au moins un mélange de remplissage et s'étendant radialement vers l'extérieur à partir de la tringle et axialement entre le retournement et la partie principale,
- la distance entre le retournement et la partie principale décroissant continûment à partir de la tringle jusqu'à une première distance minimale atteinte en un premier point du retournement, puis croissant continûment à partir du premier point du retournement jusqu'à une première distance maximale atteinte en un deuxième point du retournement,
- la distance entre le retournement et la partie principale décroissant continûment à partir du deuxième point du retournement jusqu'à une deuxième distance minimale atteinte en un troisième point du retournement radialement intérieur à l'extrémité libre du retournement,
- et la distance entre le retournement et la partie principale croît continûment à partir du troisième point du retournement jusqu'à une deuxième distance maximale atteinte en un quatrième point du retournement radialement intérieur à l'extrémité libre du retournement.

Par convention, la distance entre le retournement et la partie principale, en un point donné du retournement, est mesurée entre les lignes moyennes respectives du retournement et de la partie principale, et perpendiculairement au retournement. Sur un plan pratique, cette distance en un point donné du retournement est mesurée sur une coupe méridienne de pneumatique.

L'idée essentielle de l'invention est d'avoir un élément de remplissage, séparant le retournement de la partie principale, comprenant un premier rétrécissement, suivi d'un premier élargissement, suivi d'un deuxième rétrécissement, lui-même suivi d'un deuxième élargissement. En d'autres termes, le profil méridien du retournement présente une ondulation localisée dans la portion de bourrelet très sollicitée mécaniquement lors de la flexion du bourrelet sur le rebord de jante en utilisation. Cette conception permet de garantir un compromis en termes d'endurance entre trois zones potentiellement sensibles.

La première zone sensible est l'interface entre le mélange axialement extérieur et adjacent au retournement et le retournement. La première distance minimale atteinte en un premier point du retournement, positionné dans cette première zone sensible, entraîne un épaississement local de la portion de bourrelet axialement extérieur au retournement. Cet épaississement local entraîne une diminution des sollicitations de cisaillement à l'interface entre le mélange axialement extérieur et adjacent au retournement et le retournement, donc une meilleure tenue en fatigue de cette interface, ce qui contribue à l'amélioration de l'endurance du pneumatique.

La deuxième zone sensible est l'interface entre l'élément de remplissage et la partie principale de couche de carcasse. La première distance maximale atteinte en un deuxième point du retournement, positionné dans cette deuxième zone sensible, entraîne un épaississement local de l'élément de remplissage. Cet épaississement local entraîne une diminution des sollicitations de cisaillement à l'interface entre l'élément de remplissage et la partie principale de couche de carcasse, donc une meilleure tenue en fatigue de cette interface, ce qui contribue également à l'amélioration de l'endurance du pneumatique.

La troisième zone sensible est la portion de retournement soumise à la compression. Cette portion de retournement correspond sensiblement à la portion de bourrelet s'enroulant sur le rebord de jante, et, plus précisément, sur la portion sensiblement circulaire et radialement extérieure du rebord de jante, lors du roulage du pneumatique. Dans cette portion de bourrelet, se comportant comme une poutre en flexion, la partie principale, assimilable à la fibre extérieure de la poutre, est en extension alors que le retournement, assimilable à la fibre intérieure de la poutre, est en compression. Une deuxième distance minimale atteinte en un troisième point du retournement radialement intérieur à l'extrémité libre du retournement permet de réduire localement la distance entre le retournement et la partie principale, c'est-à-dire la distance entre les fibres extérieure et intérieure de la poutre, ce qui permet de diminuer la mise en compression de la fibre intérieure, c'est-à-dire du retournement.

Enfin, la distance entre le retournement et la partie principale croisse continûment à partir du troisième point du retournement jusqu'à une deuxième distance maximale, atteinte en un quatrième point du retournement radialement intérieur à l'extrémité libre du retournement et positionné radialement à l'extérieur du point le plus radialement intérieur de la tringle à une distance radiale.

La première distance minimale atteinte au premier point du retournement est avantageusement au plus égale à la deuxième distance minimale atteinte au troisième point du retournement.

La première distance minimale atteinte au premier point du retournement est préférentiellement au moins égale à 0.1 fois et au plus égale à 0.2 fois le diamètre de la tringle.

Le premier point du retournement étant radialement positionné à l'extérieur d'un point le plus radialement intérieur de la tringle à une distance radiale donnée, la distance radiale entre le premier point du retournement et le point le plus radialement intérieur de la tringle est également préférentiellement au moins égale à 1.5 fois et au plus égale à 2 fois le diamètre de la tringle.

La plage de valeurs de la première distance minimale ainsi que la plage de valeurs de la position radiale du premier point du retournement, correspondant à la première distance minimale, telles que précédemment définies, permettent de minimiser les sollicitations de cisaillement dans la première zone sensible, à l'interface entre le mélange axialement extérieur et adjacent au retournement et le retournement.

La première distance maximale atteinte au deuxième point du retournement est au moins égale à 1.2 fois et au plus égale à 2.5 fois la première distance minimale atteinte au premier point du retournement.

Le deuxième point du retournement étant radialement positionné à l'extérieur d'un point le plus radialement intérieur de la tringle à une distance radiale donnée, la distance radiale entre le deuxième point du retournement et le point le plus radialement intérieur de la tringle est au moins égale à 1.55 fois et au plus égale à 2.2 fois le diamètre de la tringle.

La plage de valeurs de la première distance maximale ainsi que la plage de valeurs de la position radiale du deuxième point du retournement, correspondant à la première distance maximale, telles que précédemment définies, permettent de minimiser les sollicitations de cisaillement dans la deuxième zone sensible, à l'interface entre l'élément de remplissage et la partie principale de couche de carcasse.

La deuxième distance minimale atteinte au troisième point du retournement est au moins égale à 0.5 fois, de préférence au moins égale à 1 fois, et au plus égale à 2.4 fois la première distance minimale atteinte au premier point du retournement.

Le troisième point du retournement étant radialement positionné à l'extérieur d'un point le plus radialement intérieur de la tringle à une distance radiale donnée, la distance radiale entre le troisième point du retournement et le point le plus radialement intérieur de la tringle est au moins égale à 1.8 fois et au plus égale à 2.5 fois le diamètre de la tringle.

La plage de valeurs de la deuxième distance minimale ainsi que la plage de valeurs de la position radiale du troisième point du retournement, correspondant à la deuxième distance minimale, telles que précédemment définies, permettent de minimiser les sollicitations de compression dans la deuxième zone sensible, correspondant à la portion de retournement soumise à la compression, par une mise en tension du retournement.

Il est encore avantageux que, le quatrième point du retournement étant positionné radialement à l'extérieur du point le plus radialement intérieur de la tringle à une distance radiale donnée, la distance radiale entre le quatrième point du retournement et le point le plus radialement intérieur de la tringle soit au moins égale à 1.5 fois la distance radiale entre le premier point du retournement et le point le plus radialement intérieur de la tringle.

Cette deuxième distance maximale qui correspond à un deuxième maximum d'épaisseur de l'élément de remplissage permet également de diminuer les sollicitations de cisaillement dans l'élément de remplissage. Dans ce mode de réalisation, l'épaisseur de l'élément de remplissage passe ainsi successivement par un premier minimum, puis par un premier maximum, puis par un deuxième minimum et enfin par un deuxième maximum : ce qui implique une double ondulation du retournement.

L'extrémité libre du retournement étant positionnée radialement à l'extérieur du point le plus radialement intérieur de la tringle à une distance radiale donnée, et le point, le plus axialement extérieur de la partie principale, étant positionné radialement à l'extérieur du point le plus radialement intérieur de la tringle à une distance radiale donnée, la distance radiale entre l'extrémité libre du retournement et le point le plus radialement intérieur de la tringle est au moins égale à 0.8 fois la distance radiale entre le point le plus axialement extérieur de la partie principale et le point le plus radialement intérieur de la tringle. En d'autres termes, le positionnement radial de l'extrémité libre du retournement est proche de celui du point le plus axialement extérieur de la partie principale. Ce point le plus axialement extérieur de la partie principale, en lequel la tangente à la partie principale est radiale, définit la largeur axiale du pneumatique au niveau du flanc. Ce positionnement radial de l'extrémité du retournement est caractéristique d'un retournement dit long. Un retournement long contribue à la reprise des efforts de tension au gonflage dans la couche d'armature de carcasse, sous réserve d'une rigidité de torsion de la tringle suffisamment faible. Selon le positionnement radialement intérieur ou radialement extérieur de l'extrémité de retournement par rapport au point le plus axialement extérieur de l'armature de carcasse, lors de la flexion du flanc en roulage, l'extrémité de retournement peut être soit tirée radialement vers l'extérieur et être mise en tension, soit, au contraire, poussée radialement vers l'intérieur et être mise en compression. Donc le positionnement radial de l'extrémité du retournement conditionne le passage ou non compression du retournement.

Lorsque l'élément de remplissage comprend un premier mélange de remplissage et un deuxième mélange de remplissage au moins en partie en contact entre eux, le premier mélange de remplissage s'étendant radialement vers l'extérieur à partir de la tringle jusqu'à un point le plus radialement extérieur du premier mélange de remplissage et en contact avec la partie principale, ledit point étant radialement positionné à l'extérieur d'un point le plus radialement intérieur de la tringle à une distance radiale donnée, et le premier mélange de remplissage ayant un module d'élasticité à 10% d'allongement au moins égal au module d'élasticité à 10% d'allongement du deuxième mélange de remplissage, la distance radiale entre le point le plus radialement extérieur du premier mélange de remplissage et en contact avec la partie principale, et le point le plus radialement intérieur de la tringle est au plus égale à la distance radiale entre le premier point du retournement, correspondant à la première distance minimale, et le point le plus radialement intérieur de la tringle.

Ceci entraîne la présence d'un deuxième mélange de remplissage ayant un module d'élasticité à 10% d'allongement plus faible, dans la zone d'épaississement local, délimitée par les deux rétrécissements ; ce qui entraîne une réduction supplémentaire des sollicitations de cisaillement dans la poutre et donc le risque de rupture ou de décohésion à l'interface entre l'élément de remplissage et la partie principale de couche de carcasse.

Le deuxième mélange de remplissage s'étend radialement vers l'extérieur à partir de la tringle, le long du retournement, et axialement vers l'intérieur à partir du retournement, en contact avec la tringle.

La zone d'interface entre l'élément de remplissage et le retournement, radialement à l'extérieur de la tringle, est également une zone sensible à la décohésion. La présence d'un deuxième mélange de remplissage, ayant un module d'élasticité à 10% d'allongement plus faible que celui du premier mélange de remplissage, permet de réduire les contraintes de cisaillement dans cette zone d'interface et donc de la désensibiliser à la décohésion.

Selon une variante préférée du précédent mode de réalisation, le point du deuxième mélange de remplissage, le plus axialement intérieur et en contact avec la tringle, étant axialement positionné à l'intérieur du retournement à une distance axiale donnée, la distance axiale entre le point du deuxième mélange de remplissage, le plus axialement intérieur et en contact avec la tringle, et le retournement est au moins égale à 0.15 fois et au plus égale à 0.35 fois le diamètre de la tringle.

Concernant la plage de valeurs précédemment définie, la valeur minimale garantit une efficacité minimale de cette solution, alors que la valeur maximale garantit que la rigidité de cisaillement globale de l'élément de remplissage reste suffisante pour éviter tout risque de déradialisation de la couche de carcasse.

Avantageusement, la ou chaque couche de carcasse étant constituée de renforts parallèles entre eux, enrobés dans un mélange d'enrobage, le module d'élasticité à 10% d'allongement du deuxième mélange de remplissage est au moins égal à 0.75 fois le module d'élasticité à 10% d'allongement du mélange d'enrobage, de préférence au moins égal au module d'élasticité à 10% d'allongement du mélange d'enrobage.

Un module d'élasticité à 10% d'allongement du deuxième mélange de remplissage inférieur à cette valeur augmenterait le risque de rupture ou de décohésion de l'interface entre les premier et deuxième mélanges de remplissage, du fait d'un trop grand écart entre leurs modules d'élasticité à 10% d'allongement respectifs.

En cas d'égalité des modules d'élasticité à 10% d'allongement respectifs du deuxième mélange de remplissage et du mélange d'enrobage, il n'y a pas de gradient rigidité à l'interface entre le mélange d'enrobage et le deuxième mélange de remplissage : d'où une désensibilisation à la décohésion dans cette zone d'interface.

Le module d'élasticité à 10% d'allongement du premier mélange de remplissage est, quant à lui, avantageusement au moins égal au module d'élasticité à 10% d'allongement du mélange d'enrobage.

Le deuxième mélange de remplissage a avantageusement la même composition chimique que le mélange d'enrobage. La cohésion de l'interface entre les deux mélanges est encore améliorée du fait de l'identité de leurs compositions chimiques.

Les caractéristiques de l'invention seront mieux comprises à l'aide de la description des figures 1 à 3 en annexe, qui sont des représentations simplifiées non représentées à l'échelle:
- la figure 1 présente une demi- vue en coupe, dans un plan méridien, d'un pneumatique pour véhicule lourd de type génie civil, selon un premier mode de réalisation de l'invention.
- la figure 2 présente une vue en coupe, dans un plan méridien, du bourrelet d'un pneumatique pour véhicule lourd de type génie civil, selon un deuxième mode de réalisation de l'invention.
- la figure 3 présente une vue en coupe, dans un plan méridien, du bourrelet d'un pneumatique pour véhicule lourd de type génie civil, selon un troisième mode de réalisation de l'invention.

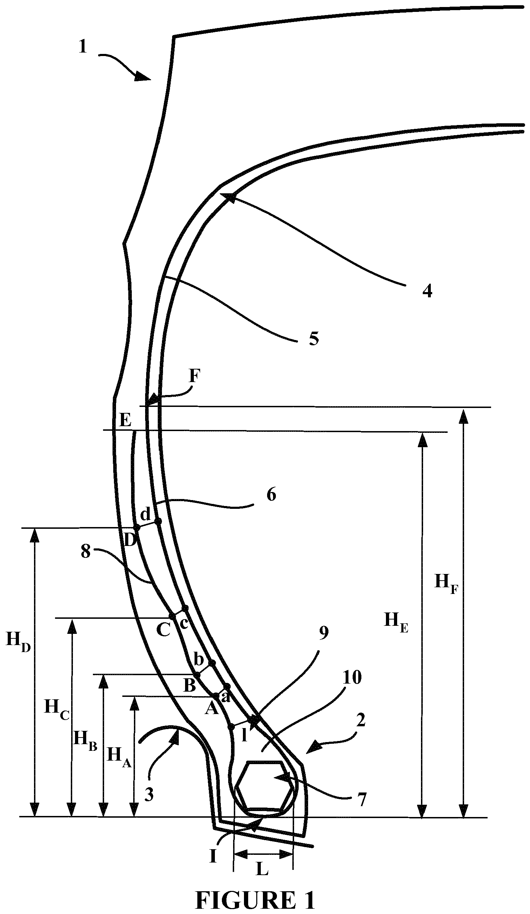

Sur la figure 1, est représentée une demi- vue en coupe, dans un plan méridien, d'un pneumatique 1 pour véhicule lourd de type génie civil selon un premier mode de réalisation de l'invention. Le pneumatique 1 comprend un bourrelet 2 destiné à entrer en contact avec une jante 3 et une armature de carcasse 4 comprenant une seule couche de carcasse 5. La couche de carcasse 5 comprend une partie principale 6 s'enroulant dans le bourrelet 2, axialement de l'intérieur vers l'extérieur du pneumatique, autour d'une tringle 7 ayant un diamètre L, pour former un retournement 8 ayant une extrémité libre E. Le bourrelet 2 comprend un élément de remplissage 9 comprenant un mélange de remplissage 10 et s'étendant radialement vers l'extérieur à partir de la tringle 7 et axialement entre le retournement 8 et la partie principale 6. La distance 1 entre le retournement 8 et la partie principale 6 décroît continûment à partir de la tringle 7 jusqu'à une première distance minimale a atteinte en un premier point A du retournement 8, puis croît continûment à partir du premier point A du retournement 8 jusqu'à une première distance maximale b atteinte en un deuxième point B du retournement 8. Selon l'invention, la distance 1 entre le retournement 8 et la partie principale 6 décroît ensuite continûment à partir du deuxième point B du retournement 8 jusqu'à une deuxième distance minimale c atteinte en un troisième point C du retournement 8 radialement intérieur à l'extrémité libre E du retournement 8, puis la distance 1 entre le retournement 8 et la partie principale 6 croît continûment à partir du troisième point C du retournement 8 jusqu'à une deuxième distance maximale d atteinte en un quatrième point D du retournement 8 radialement intérieur à l'extrémité libre E du retournement 8. Les premier, deuxième, troisième et quatrième points A, B, C et D du retournement 8 sont respectivement radialement positionnés à l'extérieur d'un point I le plus radialement intérieur de la tringle 7 à des distances radiale H_{A}, H_{B}, H_{C} et H_{D}. L'extrémité libre E du retournement 8 est positionnée radialement à l'extérieur du point I le plus radialement intérieur de la tringle 7 à une distance radiale H_{E}.

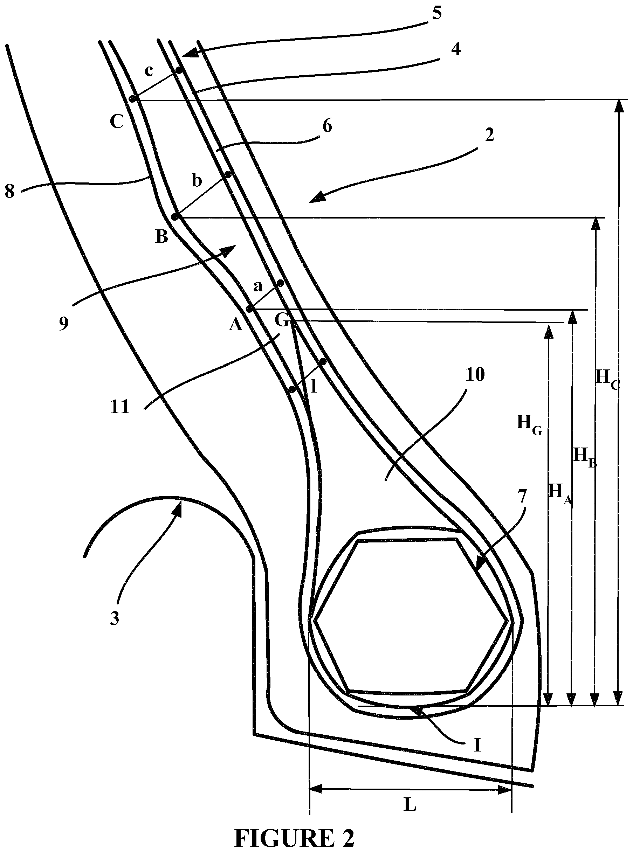

Sur la figure 2 est présentée une vue en coupe, dans un plan méridien, du bourrelet 2 d'un pneumatique pour véhicule lourd de type génie civil, selon un deuxième mode de réalisation de l'invention. Le deuxième mode de réalisation de la figure 2 diffère du premier mode de réalisation de la figure 1 par un élément de remplissage 9 comprenant un premier mélange de remplissage 10 et un deuxième mélange de remplissage 11 au moins en partie en contact entre eux. Le premier mélange de remplissage 10 s'étend radialement vers l'extérieur à partir de la tringle 7 jusqu'à un point G le plus radialement extérieur du premier mélange de remplissage et en contact avec la partie principale 6. Le point G, le plus radialement extérieur du premier mélange de remplissage 10 et en contact avec la partie principale 6, est positionné radialement à l'extérieur du point I le plus radialement intérieur de la tringle 7 à une distance radiale H_{G}.

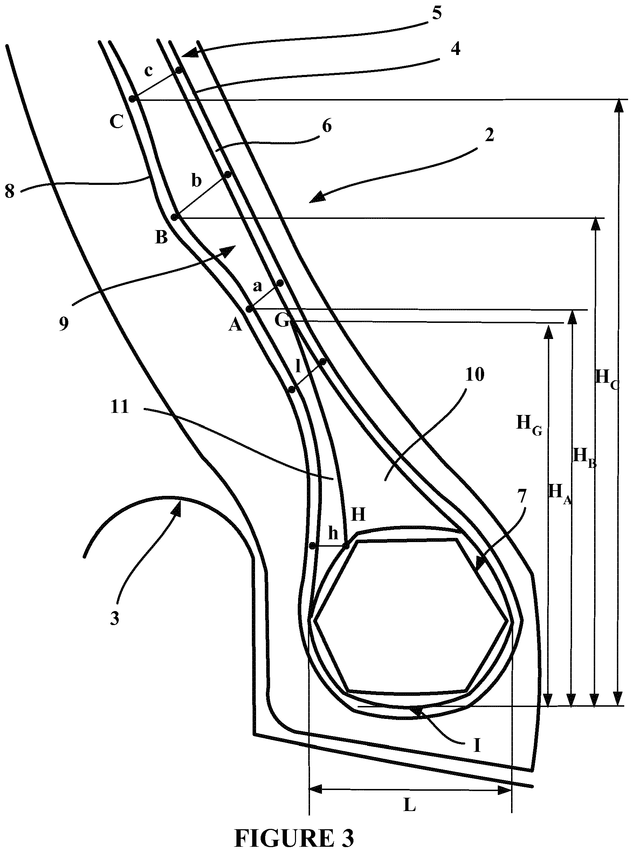

Sur la figure 3 est présentée une vue en coupe, dans un plan méridien, du bourrelet 2 d'un pneumatique pour véhicule lourd de type génie civil, selon un troisième mode de réalisation de l'invention. Le troisième mode de réalisation de la figure 3 diffère du deuxième mode de réalisation de la figure 2 par un élément de remplissage 9 comprenant un deuxième mélange de remplissage 11 s'étendant radialement vers l'extérieur à partir de la tringle 7, le long du retournement 8, et axialement vers l'intérieur à partir du retournement 8, en contact avec la tringle 7. Le point H du deuxième mélange de remplissage 11, le plus axialement intérieur et en contact avec la tringle 7, est à une distance axiale h du retournement 8.

L'invention a été en particulier étudiée dans le cas d'un pneumatique pour gros dumper de dimension 59/80R63, selon le troisième mode de réalisation de l'invention tel que représenté sur la figure 3. La tringle 7 du pneumatique a un diamètre L égal à 9 cm. L'élément de remplissage 9 comprend un premier et deuxième mélanges de remplissage (10, 11), dont les modules d'élasticité respectifs à 10% d'allongement sont égaux à 9.5 MPa et 6 MPa. Les premier, deuxième, troisième et quatrième points A, B, C et D du retournement 8 sont radialement positionnés à l'extérieur du point I le plus radialement intérieur de la tringle 7 à des distances radiales H_{A}, H_{B}, H_{C} et H_{D} respectivement égales à 17.5cm, 20 cm, 22 cm et 30 cm. Les distances a, b, c et d, mesurés entre le retournement 8 et la partie principale 6, au niveau des points A, B, C et D du retournement 8, c'est-à-dire les épaisseurs de l'élément de remplissage en ces points, sont respectivement égales à 10 mm, 20 mm, 17 mm et 22 mm.

Des simulations de calculs par éléments finis, réalisées sur le pneumatique précédemment décrit, ont montré que les sollicitations de cisaillement dans les trois zones sensibles précédemment identifiées étaient sensiblement diminuées par rapport au pneumatique de référence de l'état de la technique.

L'invention n'est pas limitée aux caractéristiques précédemment décrites et peut être étendue à d'autres configurations de bourrelet, comprenant, par exemple et de façon non exhaustive:
- un ou plusieurs mélanges de remplissage axialement intercalées entre les premier et deuxième mélanges de remplissage
- un empilement radial de plus de deux mélanges de remplissage.

## Revendications

1. Pneumatique (1) pour véhicule lourd de type génie civil comprenant :
- deux bourrelets (2) destinés à entrer en contact avec une jante (3) et reliés entre eux par une armature de carcasse (4) comprenant au moins une couche de carcasse (5),
- la ou chaque couche de carcasse (5) comprenant une partie principale (6) s'enroulant dans chaque bourrelet (2), axialement de l'intérieur vers l'extérieur du pneumatique, autour d'une tringle (7) ayant un diamètre (L), pour former un retournement (8) ayant une extrémité libre (E),
- chaque bourrelet (2) comprenant un élément de remplissage (9) comprenant au moins un mélange de remplissage (10) et s'étendant radialement vers l'extérieur à partir de la tringle (7) et axialement entre le retournement (8) et la partie principale (6),
- la distance (1) entre le retournement (8) et la partie principale (6) décroissant continûment à partir de la tringle (7) jusqu'à une première distance minimale (a) atteinte en un premier point (A) du retournement (8), puis croissant continûment à partir du premier point (A) du retournement (8) jusqu'à une première distance maximale (b) atteinte en un deuxième point (B) du retournement (8),
la distance (1) entre le retournement (8) et la partie principale (6) décroissant continûment à partir du deuxième point (B) du retournement (8) jusqu'à une deuxième distance minimale (c) atteinte en un troisième point (C) du retournement (8) radialement intérieur à l'extrémité libre (E) du retournement (8), **caractérisé en ce que** la distance (1) entre le retournement (8) et la partie principale (6) croît continûment à partir du troisième point (C) du retournement (8) jusqu'à une deuxième distance maximale (d) atteinte en un quatrième point (D) du retournement (8) radialement intérieur à l'extrémité libre (E) du retournement (8).

2. Pneumatique pour véhicule lourd de type génie civil selon la revendication 1, **caractérisé en ce que** la première distance minimale (a) atteinte au premier point (A) du retournement (8) est au plus égale à la deuxième distance minimale (c) atteinte au troisième point (C) du retournement (8).

3. Pneumatique pour véhicule lourd de type génie civil selon l'une quelconque des revendications 1 ou 2, **caractérisé en ce que** la première distance minimale (a) atteinte au premier point (A) du retournement (8) est au moins égale à 0.1 fois et au plus égale à 0.2 fois le diamètre (L) de la tringle (7).

4. Pneumatique pour véhicule lourd de type génie civil selon l'une quelconque des revendications 1 à 3, le premier point (A) du retournement (8) étant radialement positionné à l'extérieur d'un point (I) le plus radialement intérieur de la tringle (7) à une distance radiale (H_{A}), **caractérisé en ce que** la distance radiale (H_{A}) entre le premier point (A) du retournement (8) et le point (I) le plus radialement intérieur de la tringle (7) est au moins égale à 1.5 fois et au plus égale à 2 fois le diamètre (L) de la tringle (7).

5. Pneumatique pour véhicule lourd de type génie civil selon l'une quelconque des revendications 1 à 4, **caractérisé en ce que** la première distance maximale (b) atteinte au deuxième point (B) du retournement (8) est au moins égale à 1.2 fois et au plus égale à 2.5 fois la première distance minimale (a) atteinte au premier point (A) du retournement (8).

6. Pneumatique pour véhicule lourd de type génie civil selon l'une quelconque des revendications 1 à 5, le deuxième point (B) du retournement (8) étant radialement positionné à l'extérieur d'un point (I) le plus radialement intérieur de la tringle (7) à une distance radiale (H_{B}), **caractérisé en ce que** la distance radiale (H_{B}) entre le deuxième point (B) du retournement (8) et le point (I) le plus radialement intérieur de la tringle (7) est au moins égale à 1.55 fois et au plus égale à 2.2 fois le diamètre (L) de la tringle (7).

7. Pneumatique pour véhicule lourd de type génie civil selon l'une quelconque des revendications 1 à 6, **caractérisé en ce que** la deuxième distance minimale (c) atteinte au troisième point (C) du retournement (8) est au moins égale à 1 fois et au plus égale à 2.4 fois la première distance minimale (a) atteinte au premier point (A) du retournement (8).

8. Pneumatique pour véhicule lourd de type génie civil selon l'une quelconque des revendications 1 à 7, le troisième point (C) du retournement (8) étant radialement positionné à l'extérieur d'un point (I) le plus radialement intérieur de la tringle (7) à une distance radiale (H_{C}), **caractérisé en ce que** la distance radiale (H_{C}) entre le troisième point (C) du retournement (8) et le point (I) le plus radialement intérieur de la tringle (7) est au moins égale à 1.8 fois et au plus égale à 2.5 fois le diamètre (L) de la tringle (7).

9. Pneumatique pour véhicule lourd de type génie civil selon l'une quelconque des revendications 1 à 8, le quatrième point (D) du retournement (8) étant positionné radialement à l'extérieur du point (I) le plus radialement intérieur de la tringle (7) à une distance radiale (H_{D}), **caractérisé en ce que** la distance radiale (H_{D}) entre le quatrième point (D) du retournement (8) et le point (I) le plus radialement intérieur de la tringle (7) est au moins égale à 1.5 fois la distance radiale (H_{A}) entre le premier point (A) du retournement (8) et le point (I) le plus radialement intérieur de la tringle (7).

10. Pneumatique pour véhicule lourd de type génie civil selon l'une quelconque des revendications 1 à 9, l'extrémité libre (E) du retournement (8) étant positionnée radialement à l'extérieur du point (I) le plus radialement intérieur de la tringle (7) à une distance radiale (H_{E}), et le point (F), le plus axialement extérieur de la partie principale (6), étant positionné radialement à l'extérieur du point (I) le plus radialement intérieur de la tringle (7) à une distance radiale (H_{F}), **caractérisé en ce que** la distance radiale (H_{E}) entre l'extrémité libre (E) du retournement (8) et le point (I) le plus radialement intérieur de la tringle (7) est au moins égale à 0.8 fois la distance radiale (H_{F}) entre le point (F), le plus axialement extérieur de la partie principale (6), et le point (I) le plus radialement intérieur de la tringle (7).

11. Pneumatique pour véhicule lourd de type génie civil selon l'une quelconque des revendications 1 à 10, l'élément de remplissage (9) comprenant un premier mélange de remplissage (10) et un deuxième mélange de remplissage (11) au moins en partie en contact entre eux, le premier mélange de remplissage (10) s'étendant radialement vers l'extérieur à partir de la tringle (7) jusqu'à un point (G) le plus radialement extérieur du premier mélange de remplissage et en contact avec la partie principale (6), le point (G) étant radialement positionné à l'extérieur d'un point (I) le plus radialement intérieur de la tringle (7) à une distance radiale (H_{G}), et le premier mélange de remplissage (10) ayant un module d'élasticité à 10% d'allongement au moins égal au module d'élasticité à 10% d'allongement du deuxième mélange de remplissage (11), **caractérisé en ce que** la distance radiale (H_{G}) entre le point (G), le plus radialement extérieur du premier mélange de remplissage (10) et en contact avec la partie principale (6), et le point (I) le plus radialement intérieur de la tringle (7) est au plus égale à la distance radiale (H_{A}) entre le premier point (A) du retournement (8), correspondant à la première distance minimale (a), et le point (I) le plus radialement intérieur de la tringle (7).

12. Pneumatique pour véhicule lourd de type génie civil selon la revendication 11, **caractérisé en ce que** le deuxième mélange de remplissage (11) s'étend radialement vers l'extérieur à partir de la tringle (7), le long du retournement (8), et axialement vers l'intérieur à partir du retournement (8), en contact avec la tringle (7).

13. Pneumatique pour véhicule lourd de type génie civil selon la revendication 12, le point (H) du deuxième mélange de remplissage (11), le plus axialement intérieur et en contact avec la tringle (7), étant axialement positionné à l'intérieur du retournement (8) à une distance axiale (h), **caractérisé en ce que** la distance axiale (h) entre le point (H) du deuxième mélange de remplissage (11), le plus axialement intérieur et en contact avec la tringle (7), et le retournement (8) est au moins égale à 0.15 fois et au plus égale à 0.35 fois le diamètre (L) de la tringle (7).

14. Pneumatique pour véhicule lourd de type génie civil selon l'une quelconque des revendications 12 ou 13, la ou chaque couche de carcasse (5) étant constituée de renforts parallèles entre eux, enrobés dans un mélange d'enrobage, **caractérisé en ce que** le module d'élasticité à 10% d'allongement du deuxième mélange de remplissage (11) est au moins égal à 0.75 fois le module d'élasticité à 10% d'allongement du mélange d'enrobage, de préférence au moins égal au module d'élasticité à 10% d'allongement du mélange d'enrobage.

15. Pneumatique pour véhicule lourd de type génie civil selon l'une quelconque des revendications 12 à 14, **caractérisé en ce que** le deuxième mélange de remplissage (11) a la même composition chimique que le mélange d'enrobage.

## Patentansprüche

1. Reifen (1) für ein Schwerlastfahrzeug aus dem Bereich des Bauwesens, aufweisend:
- zwei Wülste (2), welche dafür vorgesehen sind, mit einer Felge (3) in Kontakt zu gelangen, und untereinander durch eine Karkassenbewehrung (4) verbunden sind, welche mindestens eine Karkassenschicht (5) aufweist,
- wobei die oder jede Karkassenschicht (5) einen Hauptteil (6) aufweist, welcher sich in jeder Wulst (2) axial vom Inneren in Richtung des Außenbereichs des Reifens um eine Stange (7) mit einem Durchmesser (L) wickelt, um einen Rückläufer (8) mit einem freien Ende (E) zu bilden,
- wobei jede Wulst (2) ein Füllelement (9) aufweist, welches mindestens eine Füllmischung (10) aufweist und sich ausgehend von der Stange (7) radial in Richtung des Außenbereichs und axial zwischen dem Rückläufer (8) und dem Hauptteil (6) erstreckt,
- wobei der Abstand (1) zwischen dem Rückläufer (8) und dem Hauptteil (6) ausgehend von der Stange (7) bis zu einem in einem ersten Punkt (A) des Rückläufers (8) erreichten ersten minimalen Abstand (a) kontinuierlich abnimmt, dann ausgehend von dem ersten Punkt (A) des Rückläufers (8) bis zu einem in einem zweiten Punkt (B) des Rückläufers (8) erreichten ersten maximalen Abstand (b) kontinuierlich zunimmt,
- wobei der Abstand (1) zwischen dem Rückläufer (8) und dem Hauptteil (6) ausgehend von dem zweiten Punkt (B) des Rückläufers (8) bis zu einem in einem dritten Punkt (C) des Rückläufers (8) erreichten zweiten minimalen Abstand (c) kontinuierlich abnimmt, welcher radial innerhalb von dem freien Ende (E) des Rückläufers (8) liegt,
**dadurch gekennzeichnet, dass** der Abstand (1) zwischen dem Rückläufer (8) und dem Hauptteil (6) ausgehend von dem dritten Punkt (C) des Rückläufers (8) bis zu einem in einem vierten Punkt (D) des Rückläufers (8) erreichten dritten maximalen Abstand (d) kontinuierlich abnimmt, welcher radial innerhalb von dem freien Ende (E) des Rückläufers (8) liegt.

2. Reifen für ein Schwerlastfahrzeug aus dem Bereich des Bauwesens nach Anspruch 1, **dadurch gekennzeichnet, dass** der in dem ersten Punkt (A) des Rückläufers (8) erreichte erste minimale Abstand (a) höchstens gleich dem in dem dritten Punkt (C) des Rückläufers (8) erreichten zweiten minimalen Abstand (c) ist.

3. Reifen für ein Schwerlastfahrzeug aus dem Bereich des Bauwesens nach einem der Ansprüche 1 oder 2, **dadurch gekennzeichnet, dass** der in dem ersten Punkt (A) des Rückläufers (8) erreichte erste minimale Abstand (a) mindestens gleich dem 0,1-fachen und höchstens gleich dem 0,2-fachen Durchmesser (L) der Stange (7) ist.

4. Reifen für ein Schwerlastfahrzeug aus dem Bereich des Bauwesens nach einem der Ansprüche 1 bis 3, wobei der erste Punkt (A) des Rückläufers (8) von einem Punkt (I), welcher radial am innersten der Stange (7) liegt, radial in Richtung des Außenbereichs in einem radialen Abstand (H_{A}) angeordnet ist, **dadurch gekennzeichnet, dass** der radiale Abstand (H_{A}) zwischen dem ersten Punkt (A) des Rückläufers (8) und dem Punkt (I), welcher radial am innersten der Stange (7) liegt, mindestens gleich dem 1,5-fachen und höchstens gleich dem 2-fachen Durchmesser (L) der Stange (7) ist.

5. Reifen für ein Schwerlastfahrzeug aus dem Bereich des Bauwesens nach einem der Ansprüche 1 bis 4, **dadurch gekennzeichnet, dass** der in dem zweiten Punkt (B) des Rückläufers (8) erreichte erste maximale Abstand (b) mindestens gleich dem 1,2-fachen und höchstens gleich dem 2,5-fachen in dem ersten Punkt (A) des Rückläufers (8) erreichten ersten minimalen Durchmesser (a) ist.

6. Reifen für ein Schwerlastfahrzeug aus dem Bereich des Bauwesens nach einem der Ansprüche 1 bis 5, wobei der zweite Punkt (B) des Rückläufers (8) von einem Punkt (I), welcher radial am innersten der Stange (7) liegt, radial in Richtung des Außenbereichs in einem radialen Abstand (H_{B}) angeordnet ist, **dadurch gekennzeichnet, dass** der radiale Abstand (H_{B}) zwischen dem ersten Punkt (B) des Rückläufers (8) und dem Punkt (I), welcher radial am innersten der Stange (7) liegt, mindestens gleich dem 1,55-fachen und höchstens gleich dem 2,2-fachen Durchmesser (L) der Stange (7) ist.

7. Reifen für ein Schwerlastfahrzeug aus dem Bereich des Bauwesens nach einem der Ansprüche 1 bis 6, **dadurch gekennzeichnet, dass** der in dem dritten Punkt (C) des Rückläufers (8) erreichte zweite minimale Abstand (c) mindestens gleich dem 1-fachen und höchstens gleich dem 2,4-fachen in dem ersten Punkt (A) des Rückläufers (8) erreichten ersten minimalen Durchmesser (a) ist.

8. Reifen für ein Schwerlastfahrzeug aus dem Bereich des Bauwesens nach einem der Ansprüche 1 bis 7, wobei der dritte Punkt (C) des Rückläufers (8) von einem Punkt (I), welcher radial am innersten der Stange (7) liegt, radial in Richtung des Außenbereichs in einem radialen Abstand (H_{C}) angeordnet ist, **dadurch gekennzeichnet, dass** der radiale Abstand (H_{C}) zwischen dem dritten Punkt (C) des Rückläufers (8) und dem Punkt (I), welcher radial am innersten der Stange (7) liegt, mindestens gleich dem 1,8-fachen und höchstens gleich dem 2,5-fachen Durchmesser (L) der Stange (7) ist.

9. Reifen für ein Schwerlastfahrzeug aus dem Bereich des Bauwesens nach einem der Ansprüche 1 bis 8, wobei der vierte Punkt (D) des Rückläufers (8) von dem Punkt (I), welcher radial am innersten der Stange (7) liegt, radial in Richtung des Außenbereichs in einem radialen Abstand (H_{D}) angeordnet ist, **dadurch gekennzeichnet, dass** der radiale Abstand (H_{D}) zwischen dem vierten Punkt (D) des Rückläufers (8) und dem Punkt (I), welcher radial am innersten der Stange (7) liegt, mindestens gleich dem 1,5-fachen radialen Abstand (H_{A}) zwischen dem ersten Punkt (A) des Rückläufers (8) und dem Punkt (I), welcher radial am innersten der Stange (7) liegt, ist.

10. Reifen für ein Schwerlastfahrzeug aus dem Bereich des Bauwesens nach einem der Ansprüche 1 bis 9, wobei das freie Ende (E) des Rückläufers (8) von dem Punkt (I), welcher radial am innersten der Stange (7) liegt, radial in Richtung des Außenbereichs in einem radialen Abstand (H_{E}) angeordnet ist, und der Punkt (F), welcher axial am weitesten außerhalb vom Hauptteil (6) liegt, von dem Punkt (I), welcher radial am innersten der Stange (7) liegt, radial in Richtung des Außenbereichs in einem radialen Abstand (H_{F}) angeordnet ist, **dadurch gekennzeichnet, dass** der radiale Abstand (H_{E}) zwischen dem freien Ende (E) des Rückläufers (8) und dem Punkt (I), welcher radial am innersten der Stange (7) liegt, mindestens gleich dem 0,8-fachen radialen Abstand (H_{F}) zwischen dem Punkt (F), welcher axial am weitesten außerhalb vom Hauptteil (6) liegt, und dem Punkt (I), welcher radial am innersten der Stange (7) liegt, ist.

11. Reifen für ein Schwerlastfahrzeug aus dem Bereich des Bauwesens nach einem der Ansprüche 1 bis 10, wobei das Füllelement (9) eine erste Füllmischung (10) und eine zweite Füllmischung (11) aufweist, welche zumindest zum Teil miteinander in Kontakt sind, wobei sich die erste Füllmischung (10) ausgehend von der Stange (7) radial in Richtung des Außenbereichs bis zu einem Punkt (G) erstreckt, welcher radial am weitesten außen von der ersten Füllmischung liegt und mit dem Hauptteil (6) in Kontakt ist, wobei der Punkt (G) von einem Punkt (I), welcher radial am innersten der Stange (7) liegt, radial in Richtung des Außenbereichs in einem radialen Abstand (H_{G}) angeordnet ist, und wobei die erste Füllmischung (10) einen Elastizitätsmodul bei 10% Dehnung mindestens gleich dem Elastizitätsmodul bei 10% Dehnung der zweiten Füllmischung (11) ist, **dadurch gekennzeichnet, dass** der radiale Abstand (H_{G}) zwischen dem Punkt (G), welcher radial am weitesten außen von der ersten Füllmischung (10) liegt und mit dem Hauptteil (6) in Kontakt ist, und dem Punkt (I), welcher radial am innersten der Stange (7) liegt, höchstens gleich dem radialen Abstand (H_{A}) zwischen dem ersten Punkt (A) des Rückläufers (8), welcher dem ersten minimalen Abstand (a) entspricht, und dem Punkt (I), welcher radial am innersten der Stange (7) liegt, ist.

12. Reifen für ein Schwerlastfahrzeug aus dem Bereich des Bauwesens nach Anspruch 11, **dadurch gekennzeichnet, dass** sich die zweite Füllmischung (11) radial ausgehend von der Stange (7) in Richtung des Außenbereichs entlang des Rückläufers (8) und axial ausgehend von dem Rückläufer (8) im Kontakt mit der Stange (7) in Richtung des Inneren erstreckt.

13. Reifen für ein Schwerlastfahrzeug aus dem Bereich des Bauwesens nach Anspruch 12, wobei der Punkt (H) der zweiten Füllmischung (11), welcher axial am innersten liegt und mit der Stange (7) in Kontakt ist, in einem Abstand (h) zu dem Rückläufer (8) in Richtung des Inneren angeordnet ist, **dadurch gekennzeichnet, dass** der axiale Abstand (h) zwischen dem Punkt (H) der zweiten Füllmischung (11), welcher axial am innersten liegt und mit der Stange (7) in Kontakt ist, und dem Rückläufer (8) mindestens gleich dem 0,15-fachen und höchstens gleich dem 0,35-fachen Durchmesser (L) der Stange (7) ist.

14. Reifen für ein Schwerlastfahrzeug aus dem Bereich des Bauwesens nach einem der Ansprüche 12 oder 13, wobei die oder jede Karkassenschicht (5) aus zueinander parallelen Verstärkungen gebildet ist, welche in eine Mantelmischung eingebunden sind, **dadurch gekennzeichnet, dass** der Elastizitätsmodul bei 10% Dehnung der zweiten Füllmischung (11) mindestens gleich dem 0,75-fachen Elastizitätsmodul bei 10% Dehnung der Mantelmischung, vorzugsweise mindestens gleich dem Elastizitätsmodul bei 10% Dehnung der Mantelmischung, ist.

15. Reifen für ein Schwerlastfahrzeug aus dem Bereich des Bauwesens nach einem der Ansprüche 12 bis 14, **dadurch gekennzeichnet, dass** die zweite Füllmischung (11) dieselbe chemische Zusammensetzung wie die Mantelmischung aufweist.

## Claims

1. Tyre (1) for a heavy vehicle of the construction plant type, comprising:
- two beads (2) intended to come into contact with a rim (3) and connected to one another by a carcass reinforcement (4) comprising at least one carcass layer (5),
- the or each carcass layer (5) comprising a main part (6) wrapped, in each bead (2), axially from the inside towards the outside of the tyre, around a bead wire (7) having a diameter (L), to form a turnup (8) having a free end (E),
- each bead (2) comprising a filling element (9) comprising at least one filling compound (10) and extending radially towards the outside from the bead wire (7) and axially between the turnup (8) and the main part (6),
- the distance (1) between the turnup (8) and the main part (6) decreasing continuously from the bead wire (7) as far as a first minimum distance (a) reached at a first point (A) of the turnup (8), then increasing continuously from the first point (A) of the turnup (8) as far as a first maximum distance (b) reached at a second point (B) of the turnup (8), the distance (1) between the turnup (8) and the main part (6) decreasing continuously from the second point (B) of the turnup (8) as far as a second minimum distance (c) reached at a third point (C) of the turnup (8) radially on the inside of the free end (E) of the turnup (8),
**characterized in that** the distance (1) between the turnup (8) and the main part (6) increases continuously from the third point (C) of the turnup (8) as far as a second maximum distance (d) reached at a fourth point (D) of the turnup (8) that is radially on the inside of the free end (E) of the turnup (8).

2. Tyre for a heavy vehicle of the construction plant type according to Claim 1, **characterized in that** the first minimum distance (a) reached at the first point (A) of the turnup (8) is at most equal to the second minimum distance (c) reached at the third point (C) of the turnup (8).

3. Tyre for a heavy vehicle of the construction plant type according to either of Claims 1 and 2, **characterized in that** the first minimum distance (a) reached at the first point (A) of the turnup (8) is at least equal to 0.1 times and at most equal to 0.2 times the diameter (L) of the bead wire (7).

4. Tyre for a heavy vehicle of the construction plant type according to any one of Claims 1 to 3, the first point (A) of the turnup (8) being radially positioned on the outside of a radially innermost point (I) of the bead wire (7) at a radial distance (H_{A}), **characterized in that** the radial distance (H_{A}) between the first point (A) of the turnup (8) and the radially innermost point (I) of the bead wire (7) is at least equal to 1.5 times and at most equal to 2 times the diameter (L) of the bead wire (7).

5. Tyre for a heavy vehicle of the construction plant type according to any one of Claims 1 to 4, **characterized in that** the first maximum distance (b) reached at the second point (B) of the turnup (8) is at least equal to 1.2 times and at most equal to 2.5 times the first minimum distance (a) reached at the first point (A) of the turnup (8).

6. Tyre for a heavy vehicle of the construction plant type according to any one of Claims 1 to 5, the second point (B) of the turnup (8) being radially positioned on the outside of a radially innermost point (I) of the bead wire (7) at a radial distance (H_{B}), **characterized in that** the radial distance (H_{B}) between the second point (B) of the turnup (8) and the radially innermost point (I) of the bead wire (7) is at least equal to 1.55 times and at most equal to 2.2 times the diameter (L) of the bead wire (7).

7. Tyre for a heavy vehicle of the construction plant type according to any one of Claims 1 to 6, **characterized in that** the second minimum distance (c) reached at the third point (C) of the turnup (8) is at least equal to 1 times and at most equal to 2.4 times the first minimum distance (a) reached at the first point (A) of the turnup (8).

8. Tyre for a heavy vehicle of the construction plant type according to any one of Claims 1 to 7, the third point (C) of the turnup (8) being radially positioned on the outside of a radially innermost point (I) of the bead wire (7) at a radial distance (H), **characterized in that** the radial distance (H_{C}) between the third point (C) of the turnup (8) and the radially innermost point (I) of the bead wire (7) is at least equal to 1.8 times and at most equal to 2.5 times the diameter (L) of the bead wire (7).

9. Tyre for a heavy vehicle of the construction plant type according to any one of Claims 1 to 8, the fourth point (D) of the turnup (8) being radially positioned on the outside of the radially innermost point (I) of the bead wire (7) at a radial distance (H_{D}), **characterized in that** the radial distance (H_{D}) between the fourth point (D) of the turnup (8) and the radially innermost point (I) of the bead wire (7) is at least equal to 1.5 times the radial distance (H_{A}) between the first point (A) of the turnup (8) and the radially innermost point (I) of the bead wire (7).

10. Tyre for a heavy vehicle of the construction plant type according to any one of Claims 1 to 9, the free end (E) of the turnup (8) being positioned radially on the outside of the radially innermost point (I) of the bead wire (7) at a radial distance (H_{E}), and the axially outermost point (F), of the main part (6), being positioned radially on the outside of the radially innermost point (I) of the bead wire (7) at a radial distance (H_{F}), **characterized in that** the radial distance (H_{E}) between the free end (E) of the turnup (8) and the radially innermost point (I) of the bead wire (7) is at least equal to 0.8 times the radial distance (H_{F}) between the axially outermost point (F), of the main part (6), and the radially innermost point (I) of the bead wire (7).

11. Tyre for a heavy vehicle of the construction plant type according to any one of Claims 1 to 10, the filling element (9) comprising a first filling compound (10) and a second filling compound (11) at least partially in contact with one another, with the first filling compound (10) extending radially towards the outside from the bead wire (7) as far as a radially outermost point (G) of the first filling compound and in contact with the main part (6), the point (G) being radially positioned on the outside of a radially innermost point (I) of the bead wire (7) at a radial distance (H_{G}), and the first filling compound (10) having an elastic modulus at 10% elongation at least equal to the elastic modulus at 10% elongation of the second filling compound (11), **characterized in that** the radial distance (H_{G}) between the radially outermost point (G), of the first filling compound (10) and in contact with the main part (6), and the radially innermost point (I) of the bead wire (7) is at most equal to the radial distance (H_{A}) between the first point (A) of the turnup (8), corresponding to the first minimum distance (a), and the radially innermost point (I) of the bead wire (7).

12. Tyre for a heavy vehicle of the construction plant type according to Claim 11, **characterized in that** the second filling compound (11) extends radially towards the outside from the bead wire (7), along the turnup (8), and axially towards the inside from the turnup (8), in contact with the bead wire (7).

13. Tyre for a heavy vehicle of the construction plant type according to Claim 12, the axially innermost point (H) of the second filling compound (11), that is also in contact with the bead wire (7), being axially positioned on the inside of the turnup (8) at an axial distance (h), **characterized in that** the axial distance (h) between the axially innermost point (H) of the second filling compound (11), that is also in contact with the bead wire (7), and the turnup (8) is at least equal to 0.15 times and at most equal to 0.35 times the diameter (L) of the bead wire (7).

14. Tyre for a heavy vehicle of the construction plant type according to either one of Claims 12 and 13, the or each carcass layer (5) being made up of mutually parallel reinforcers coated in a coating compound, **characterized in that** the elastic modulus at 10% elongation of the second filling compound (11) is at least equal to 0.75 times the elastic modulus at 10% elongation of the coating compound, preferably at least equal to the elastic modulus at 10% elongation of the coating compound.

15. Tyre for a heavy vehicle of the construction plant type according to any one of Claims 12 to 14, **characterized in that** the second filling compound (11) has the same chemical composition as the coating compound.
